# EUROPÄISCHE PATENTSCHRIFT

(11) **EP 0 905 201 B1**
(45) Veröffentlichungstag und Bekanntmachung des Hinweises auf die Patenterteilung: **21.11.2001**
(21) Anmeldenummer: 98810817.1
(22) Anmeldetag: 20.08.1998
(51) Int. Cl.: C09B 67/22, D06P 1/384

(54) **Wasserlösliche Reaktivfarbstoffmischungen und ihre Verwendung zum Färben**
Mixtures of water soluble reactive dyes and their use for dyeing
Mélanges de colorants réactifs solubles dans l'eau et leur utilisation en teinture

(30) Priorität: 26.09.1997 CH 226997
(43) Veröffentlichungstag der Anmeldung: 31.03.1999
(73) Patentinhaber: Bezema AG, 9462 Montlingen (CH)
(72) Erfinder: Wallaschek, Günter Dr., 9437 Marbach (CH); Speckle, Kurt, 6842 Koblach (AT); Eggenberger, Roger, 6840 Götzis (AT)

(56) Entgegenhaltungen:
- EP-A- 0 531 968
- EP-A- 0 600 322
- EP-A- 0 735 111
- EP-A- 0 795 586
- DE-A- 2 509 173
- DE-A- 3 515 406
- DATABASE WPI Section Ch, Week 8530 Derwent Publications Ltd., London, GB; Class E22, AN 85-180775 XP002087863 & JP 60 108472 A (KASEI HECHST KK) , 13. Juni 1985

## Beschreibung

Gegenstand der Erfindung sind Zusammensetzungen wasserlöslicher, faserreaktiver Farbstoffe in fester oder gelöster Form, oder in der färberischen Anwendung, bzw. Färbepräparationen solcher Farbstoffzusammensetzungen und ihre Verwendung zum Färben von carbonamid- und hydroxygruppenhaltigen Fasermateralien.

Aus dem Colour Index als C.l. Reactive Blue 19 ist ein anthrachinoider Farbstoff der allgemeinen Formel (I) bekannt. 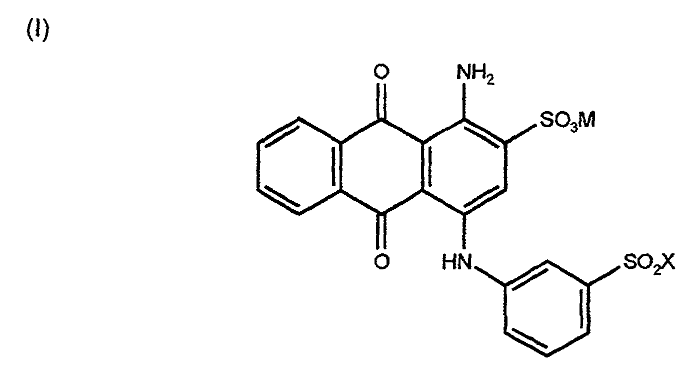 worin die einzelnen Formelglieder zueinander gleiche oder voneinander verschiedene Bedeutung besitzen und
- X: für -CH₂=CH₂ oder -CH₂CH₂OSO₃M steht,
- M: ein Wasserstoffatom oder Alkalimetall ist.

Dieser faserreaktive, wasserlösliche Farbstoff verfügt über ein hervorragendes Farb-Aufbauverhalten. Durch seine hohe Affinität und Reaktivität gegenüber cellulosischen Fasern erfolgt im alkalischen Färbeprozess ein derart rasches Aufziehen und insbesondere Fixieren auf der Faser, dass in der Praxis oftmals Färbungen resultieren, die eine ungenügende Egalität aufweisen.
Desweiteren ist aus dem Colour Index als C.l. Reactive Black 5 ein faserreaktiver, marineblauer Disazofarbstoff der allgemeinen Formel (II) bekannt. 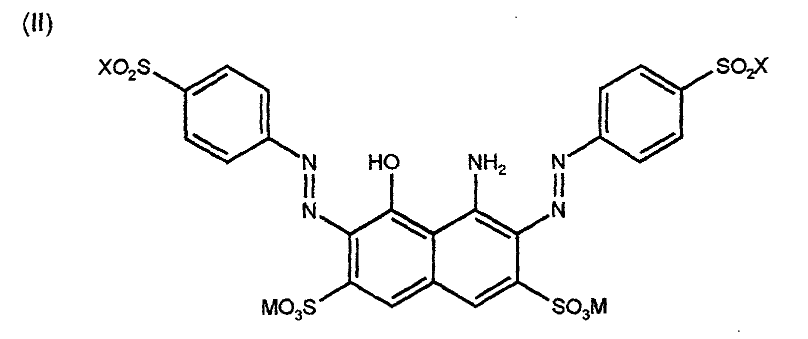 worin die einzelnen Formelglieder zueinander gleiche oder voneinander verschiedene Bedeutung besitzen und
- X: für - CH₂=CH₂ oder -CH₂CH₂OSO₃M steht,
- M: ein Wasserstoffatom oder Alkalimetall ist.

Färbungen auf Cellulosefasem mit diesen farbstarken Reaktivfarbstoffen besitzen lediglich mässige bis schlechte Lichtechtheiten. Zudem sind die Farbausbeuten beim Färben mit dem Farbstoff der Formel (II) stark vom Flottenverhältnis abhängig.

Es wurde nun gefunden, dass die Nachteile der beschriebenen Farbstoffe erfindungsgemäss durch eine Mischung der faserreaktiven Farbstoffe der allgemeinen Formeln (I) und (II) behoben werden. Das Farbstoffgemisch, bzw. die gleichzeitige Verwendung der Farbstoffe der allgemeinen Formeln (I) und (II) liefert auf carbonamid- und hydroxygruppenhaltigen Fasermaterialien in überraschender Weise egale Färbungen, die die Anforderungen der Praxis sowohl in der Ausziehfärberei, wie auch der Klotzverfahren vollumfänglich erfüllen. Insbesondere wurde gefunden, dass sowohl der faserreaktive Anthrachinon-Farbstoff der Formel (I) als auch derfaserreaktive Disazofarbstoff der Formel (II) nicht mehr die färberischen Nachteile zeigen,wenn sie als Mischung oder zusammen eingesetzt werden. Dies äussert sich insbesondere darin, dass die Abhängigkeit der Farbausbeute von der Veränderung des Flottenverhältnisses stark verringert wird. Die Färbungen liefern auch bei hellen und mittleren Farbtiefen gute bis ausreichende Lichtechtheiten.

In den erfindungsgemässen Farbstoffmischungen, bzw. erfindungsgemäss angewendeten Farbstoffzusammensetzungen sind der Farbstoff der allgemeinen Formel (I) und der Farbstoff der allgemeinen Formel (II) im Verhältnis von 80 : 20 bis 30 : 70 Massenprozente enthalten, bzw. finden in diesem Verhältnis ihre Verwendung zum Färben.

Die erfindungsgemässen Farbstoffgemische können in fester Form, z. B. als Pulver oder Granulat, vorliegen. Aus der Synthese oder aus dem Farbstoffinish stammend können Coupage-, Stell- und/oder Hilfsmittel enthalten sein, z. B. Elektrolytsalze, Puffersubstanzen, Färbereihilfsmittel.

Die Farbstoffzusammensetzungen können auch in Form einer flüssigen Lösung vorliegen, insbesondere als wässrige Lösungen mit einem Gesamtfarbstoffgehalt der Farbstoffe (I) und (II) zwischen 10 und 40 Masseprozent. Dabei können die Lösungen die üblichen und gängigen Zusätze flüssiger, wässriger Reaktivfarbstoffpräparationen enthalten, wie Puffersubstanzen, Färbereihilfsmittel, u. ä.

Die erfindungsgemässen Farbstoffmischungen lassen sich in bekannter und üblicher Weise herstellen, wie beispielsweise durch intensives Vermischen der einzelnen festen Farbstoffkomponenten oder der flüssigen Lösungen der einzelnen Farbstoffkomponenten. Möglich ist aber auch das Vermischen der einzelnen Syntheselösungen der Farbstoffkomponenten und die anschliessende gemeinsame Sprühtrocknung, gegebenenfalls nach vorherigem Aussalzen. Unerheblich ist bei der Herstellung der erfindungsgemässen Farbstoffmischungen, ob die üblichen, obengenannten Zusätze der Lösung selbst vor oder nach der Sprühtrocknung zugegeben werden.

Die mit den erfindungsgemässen Farbstoffzusammensetzungen egal und mit guten Echtheiten färbbaren carbonamid- und hydroxygruppenhaltigen Fasermaterialien sind beispielsweise Wolle, synthetische Polyamidfasern und insbesondere Cellulosefasem wie z. B. Baumwolle.

Die erfindungsgemässen Farbstoffzusammensetzungen lassen sich nach den bekannten, üblichen Applikations- und Fixierverfahren für faserreaktive Farbstoffe anwenden. Insbesondere vorteilhaft zeigt sich das färberische Verhalten der erfindungsgemässen Farbstoffmischungen in den Färbeweisen des Ausziehverfahrens aus wässrigem Bad im alkalischen Medium bei Flottenverhältnissen von 1: 5 bis 1: 50 und einer Färbetemperatur von 40 bis 60 °C. Sehr gute Farbausbeuten mit einem egalen Färbeergebnis werden auch mit dem bekannten Klotzverfahren erzielt, wobei die erfindungsgemässe Farbstoffzusammensetzung mittels Alkali durch Verweilen bei Raumtemperatur, durch Dämpfen oder mit Trockenhitze fixiert werden kann.

Die erfindungsgemässen Farbstoffmischungen können in Form von fester oder flüssiger Präparation vom Färber angewendet werden. Gleichfalls ist es jedoch auch in erfindungsgemässer Weise möglich, die beiden Farbstoffkomponenten im angegebenen Mischungsbereich getrennt in das Färbebad, bzw. Färbeflotte einzusetzen, bzw. einzuarbeiten. Die Erfindung betrifft somit auch die gleichzeitige Verwendung eines Farbstoffes der allgemeinen Formel (I) mit einem Farbstoff der allgemeinen Formel (II) in den angegebenen Mengenverhältnissen zum Färben der genannten Fasermaterialien nach den üblichen Applikations- und Fixierverfahren für faserreaktive Farbstoffe, bzw. ein Verfahren zum Färben dieser Fasermaterialien unter gleichzeitiger Anwendung der beiden Farbstofftypen der Formeln (I) und (II) in den angegebenen Mengenverhältnissen.

Die nachfolgenden Beispiele dienen der Erläuterung der Erfindung. Die Teile sind Masseteile. Die Prozentangaben beziehen sich auf Masseprozent.

### Beispiele:

### Beispiel 1:

100 Teile eines gebleichten Baumwolltrikots werden bei 25 °C in einer Lösung von 1,0 Teilen des Farbstoffes der Formel (A), 1,4 Teilen des Farbstoffes (B) und 50 g/l Natriumchlorid in 1000 Teilen Wasser eingebracht.

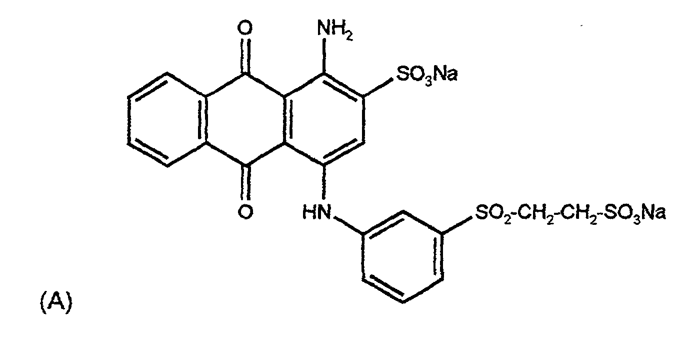

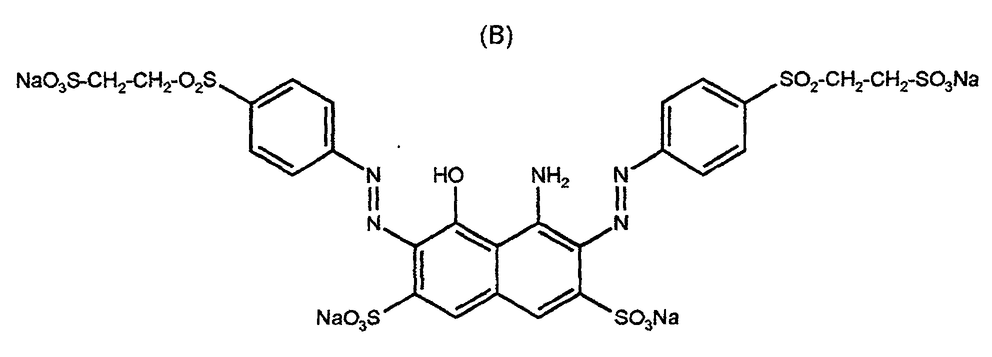

5 Teile Soda und 3 Teile einer wässrigen Natronlauge 38 °Bé werden hinzugefügt. Unter guter Bewegung wird innerhalb von 15 Minuten auf 40 °C erwärmt. Die Färbung wird 60 Minuten bei der Temperatur fortgeführt. Anschliessend wird das gefärbte Material in üblicher Weise durch Spülen mit kaltem und heissem Wasser, Neutralisation in einem wässrigen, verdünnte Essigsäure enthaltenden Bad, kochendes Behandeln mit einem nichtionogenen Tensid und erneutem kalten Spülen fertiggestellt. Nach dem Trocknen ergibt sich eine egale, farbtiefe, rotstichige Marineblau-Färbung mit guten Echtheitseigenschaften und einer guten Lichtechtheit.

### Vergleichsbeispiel 1a:

Man arbeitet entsprechend der Verfahrensweise des Beispiels 1, verwendet jedoch 2,4 Teile des Farbstoffes der Formel (A). Erhalten wird eine klare, blaue Färbung mit unegalem Warenbild, das zudem dunkle Flecken aufweist.

### Vergleichsbeispiel 1b:

Gearbeitet wird entsprechend der Verfahrensweise des Beispieles 2, verwendet werden jedoch 2,4 Teile des Farbstoffes der Formel (B). Man erhält eine Färbung mit einem trüben, marineblauen Farbton, der speziell eine schlechte Lichtechtheit aufweist.

### Beispiel 2:

100 Teile eines mercerisierten Baumwoll-Gewebes werden bei Raumtemperatur in eine Lösung von 1,0 Teilen des Farbstoffes (A), 1,4 Teilen des Farbstoffes (B) und 50 Teilen Glaubersalz eingebracht. Nach Zugabe von 5 Teilen Soda und 1 Teil einer wässrigen, 32 %-igen Natronlauge wird unter guter Bewegung des Baumwoll-materials das Färbebad innerhalb von 15 Minuten auf 60 °C erwärmt und die Färbung 90 Minuten bei dieser Temperatur weitergeführt Anschliessend wird das erhaltene gefärbte Material in üblicher Weise, wie in Beispiel 1 beschrieben, fertiggestellt. Man erhält ebenfalls eine intensive, marineblaue Färbung hervorragender Gleichmässigkeit und guten Echtheitniveaus.

### Beispiele 3 bis 5:

Man verfährt jeweils gemäss der Verfahrensweise des Beispiels 1, setzt jedoch die beiden Farbstoffe (A) und (B) in anderen Mischungsverhältnissen, wie nachfolgend tabellarisch aufgeführt, ein. Erhalten werden ebenfalls Färbungen hoher Gleichmässigkeit ohne Flecken, Stippen und Streifen mit hohen Echtheitseigenschaften in einem für das jeweilige Tabellenbeispiel angegebenen Farbton.

| Beispiel | Teile Farbstoff (A) | Teile Farbstoff (B) | Farbton |
|---|---|---|---|
| 3 | 1,2 | 0,4 | grünstichiges Blau |
| 4 | 0,6 | 0,4 | lebhaftes Marineblau |
| 5 | 1,0 | 1,2 | rotstichiges Marineblau |

### Beispiel 6:

Mercerisiertes Baumwollgewebe wird bei einer Temperatur von etwa 25 °C mit einer Flottenaufnahme von 80 % mit einer Färbeflotte geklotzt, die aus 1000Teilen Wasser, 7 Teilen des Farbstoffes (A), 6 Teilen des Farbstoffes (B), 23 Teilen einer wässrigen, 32 %-igen Natronlauge, 130 Teilen eines wässrigen Wasserglases mit einem Gehalt von 38 °Bé und 2 Teilen eines handelsüblichen Netzmittels besteht. Das geklotzte Gewebe wird sofort luftdicht in Folie gewickelt und 12 Stunden bei 25 °C verweilen lassen. Das so gefärbte Material wird wie in Beispiel 1 beschrieben, fertiggestellt. Es wird eine intensive, lebhafte Marineblau-Färbung mit guter Egalität und guter Lichtechtheit erhalten.

### Beispiel 7:

100 Teile eines filzfrei-ausgerüsteten Wollgewebes werden bei 40 °C in eine Lösung von 0,7 Teilen des Farbstoffes der Formel (A), 0,7 Teilen des Farbstoffes der Formel (B), 3 Teilen eines handelsüblichen Egalisierhilfsmittels und 1,5 Teilen Essigsäure (80 %-ig) eingebracht. Unter guter Bewegung des Textilgutes wird innerhalb von 40 Minuten auf 95 °C erwärmt. Die Färbung wird weitere 40 Minuten bei der Temperatur fortgeführt. Anschliessend wird die Färbeflotte abgelassen, mit kaltem Wasser gespült und auf frischem Bad mit 4 Teilen Ammoniak 20 Minuten bei 40 °C fertiggestellt. Sodann wird die Färbung kalt und nochmals heiss mit Wasser gespült. Nach dem Trocknen erhält man eine farbtiefe, grünstichige Blaufärbung mit guter Egalität und guter Lichtechtheit.

### Beispiel 8:

An Stelle der direkten Anwendung von festen Farbstoffpulvem der einzelnen erfindungsgemäss verwendeten Farbstoffe oder deren festen Mischungen können die erfindungsgemäss verwendeten Farbstoffe auch in einer lagerstabilen, wässrigen Lösung eingesetzt werden. Eine wässrige, lagerstabile Lösung der erfindungsgemässen Farbstoffgemische erhält man beispielsweise durch Lösen von entsprechenden Mengen des Farbstoffes der Formel (A) und des Farbstoffes (B) oder einer Mischung derselben in Wasser unter Zusatz eines Puffers, der die Lösung auf einen pH-Wert zwischen 3 und 7 einzustellen und zu halten vermag, so beispielsweise durch Lösen von 6 Teilen des Farbstoffes (A) und 4 Teilen des Farbstoffes (B) in 100 Teilen Wasser und anschliessende Einstellung des pH-Wertes mit einem Kaliumdihydrogenphosphat/Dinatrium hydrogenphosphat-Puffer auf einen pH-Wert von 5. Diese lagerstabile Flüssigeinstellung der erfindungsgemässen Farbstoffmischung kann auch nach einer Lagerzeit von mehreren Wochen ohne Verlust der färberischen Eigenschaften zum Färben von Cellulosefasermaterial, wie Baumwolle, gemäss einer der in den vorherigen Beispielen angegebenen Färbeweisen eingesetzt werden.

## Patentansprüche

1. **Zusammensetzung** von wasserlöslichen, faserreaktiven Farbstoffen,
**dadurch gekennzeichnet, dass** sie aus
einer **Mischung** aus
a) einem Anthrachinonfarbstoff der allgemeinen Formel (I) 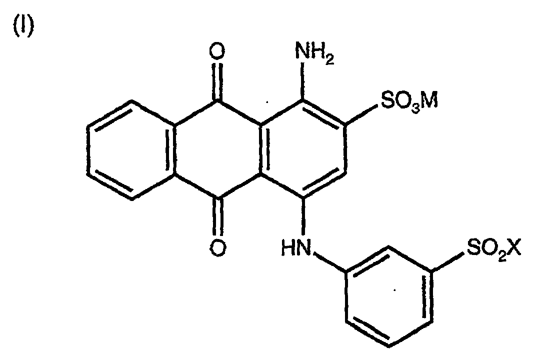 und
b) einem Diazofarbstoff der allgemeinen Formel (II) 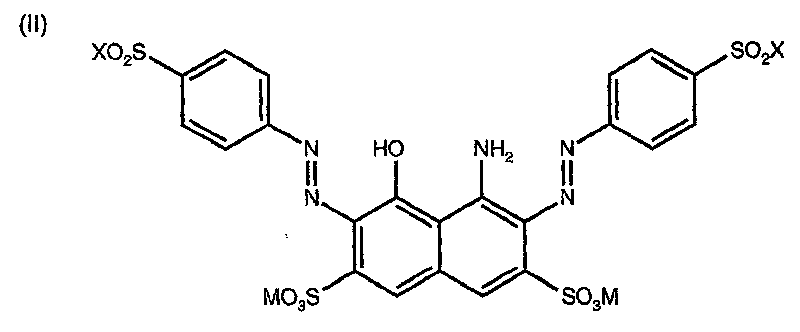 im Verhältnis von 80:20 bis 30:70 Masseteilen der Farbstoffe (I) und (II) besteht, worin die einzelnen Formelglieder zueinander gleiche oder voneinander verschiedene Bedeutung besitzen und
X für -CH=CH₂ oder -C₂H₄OSO₃M steht,
M Wasserstoff oder Alkalimetall ist.

2. Wässrige Lösung einer Zusammensetzung nach Anspruch 1,
**dadurch gekennzeichnet, dass**
der Gesamtgehalt der Farbstoffe (I) und (II) 10 bis 40 Masseprozent beträgt.

3. Verwendung der Zusammensetzung nach einem der Ansprüche 1 bis 2 zum Färben von Fasermaterialien, insbesondere hydroxyl- und/oder carbonamidgruppenhaltigem.

4. Verwendung eines Farbstoffes der in Anspruch 1 genannten und definierten allgemeinen Formel (I) zusammen mit einem Farbstoff entsprechend der in Anspruch 1 genannten und definierten allgemeinen Formel (II) im Mengenverhältnis von 80:20 bis 30:70 Masseteilen zum Färben von carbonamid- und/oder hydroxygruppenhaltigem Fasermaterial.

## Claims

1. **Compound** of water-soluble fibre-reactive dyes
**characterized by**
a **mixture** of
a) an anthraquinone dye represented by the general formula (I) 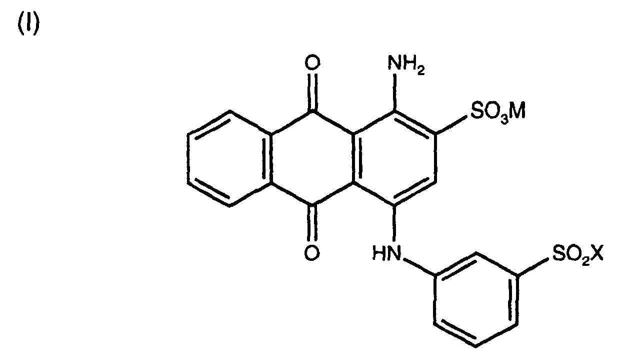 and
b) a diazo dye represented by the general formula (II) 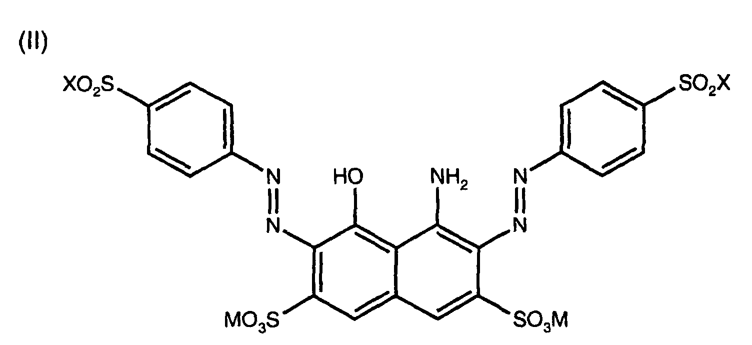 at a ratio of 80:20 up to 30:70 parts of the dyes (I) and (II) wherein the individual parts of the formula have the same or a different meaning in relationship with each other
X stands for -CH=CH₂ or -C₂H₄OSO₃M
M is hydrogen or an alkaline metal.

2. Aqueous solution of the compound as under claim 1,
**characterized by** the fact that
the total content of the dyes (I) and (II) is 10 to 40 mass percent.

3. Use of the compound as under claims 1 and 2 to dye fibre materials, especially fibres containing hydroxyl or carbonamide groups.

4. Use of a dye represented by the general formula (I) as mentioned and defined in claim 1 with a dye represented by the general formula (II) as mentioned and defined in claim 2 at a 80:20 up to a 30:70 ratio, to dye fibres that contain hydroxyl and/or carbonamide groups.

## Revendications

1. **Composé** de colorants solubles dans l'eau et réagissant avec la fibre ayant pour caractéristique le fait qu'il s'agit
d'un **mélange**
a) d'un anthraquinone de formule générale (I) 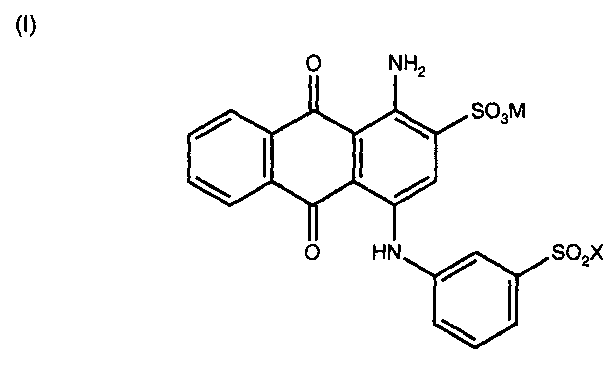 et
b) d'un colorant diazoïque de formule générale (II) 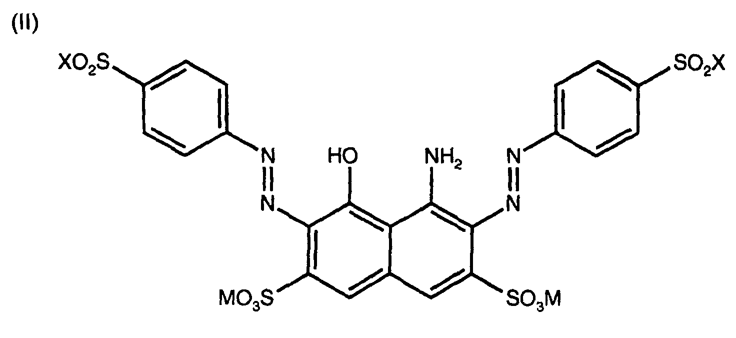 à raison de 80:20 à 30:70 parts en masse des colorants (I) et (II) et dont les éléments de la formule ont la même signification ou une signification différente l'un par rapport à l'autre
et où
X signifie -CH=CH₂ ou -C₂H₄OSO₃M
M est l'hydrogène ou un métal alcalin

2. Solution aqueuse du composé défini à la revendication 1,
ayant pour caractéristique le fait que
le contenu total en colorants (I) et (II) est de 10 à 40% en masse.

3. Utilisation du composé défini aux revendications 1 et 2 pour la teinture de fibres et en particulier de celles qui contiennent des groupes hydroxyle et/ou du carbonamide.

4. Utilisation d'un colorant de formule générale (I) telle qu'elle est mentionnée et définie à la revendication 1. avec un colorant de formule générale (II) telle qu'elle est mentionnée et définie à la revendication 1. à raison de 80:20 à 30:70 parts en masse pour la teinture de fibres contenant des groupes carbonamide et/ou hydroxyle.
